# FASCICULE DE BREVET EUROPEEN

(11) **EP 1 378 639 B1**
(45) Date de publication et mention de la délivrance du brevet: **11.10.2006**
(21) Numéro de dépôt: 03291572.0
(22) Date de dépôt: 26.06.2003
(51) Int. Cl.: F01N 7/18, B60K 13/04

(54) **Suspente pour tubulure d'echappement de vehicule automobile et vehicule equipe d'une telle suspente**
Elastische Aufhängung für die Abgasanlage eines Kraftfahrzeuges und Kraftfahrzeug mit einer solchen Aufhängung
Exhaust pipe suspension hanger for a vehicle and a vehicle equipped with such a suspension hanger

(30) Priorité: 05.07.2002 FR 0208478
(43) Date de publication de la demande: 07.01.2004
(73) Titulaire: HUTCHINSON, 75008 Paris (FR)
(72) Inventeur: Sauvat, Gilles, 28220 Cloyes/Loir (FR)
(74) Mandataire: Burbaud, Eric

(56) Documents cités:
- DE-A- 2 353 619
- US-A- 4 116 411
- PATENT ABSTRACTS OF JAPAN vol. 2002, no. 09, 4 septembre 2002 (2002-09-04) -& JP 2002 138826 A (HONDA MOTOR CO LTD), 17 mai 2002 (2002-05-17)

## Description

La présente invention est relative aux suspentes pour tubulures d'échappement de véhicules automobiles et aux véhicules équipés de telles suspentes.

Plus particulièrement, l'invention concerne une suspente pour tubulure d'échappement de véhicule automobile, destinée à relier entre eux des premier et deuxième éléments de véhicule choisis parmi la caisse du véhicule et une tubulure d'échappement du véhicule, ladite suspente comportant au moins :
- un corps en élastomère,
- une première armature rigide destinée à être fixée au premier élément de véhicule, cette première armature étant solidaire d'un organe limiteur (cet organe peut être soit rigide, soit souple et inextensible) qui forme une ouverture, et ladite première armature étant reliée au corps en élastomère,
- et une deuxième armature rigide qui est destinée. à être fixée au deuxième élément de véhicule, cette deuxième armature comportant au moins d'une part, un premier tronçon qui s'étend longitudinalement sensiblement parallèlement à l'organe limiteur, et d'autre part, un deuxième tronçon qui pénètre dans l'ouverture de l'organe limiteur, ledit deuxième tronçon traversant le corps en élastomère de façon que ledit corps en élastomère relie ledit deuxième tronçon à la première armature, ledit organe limiteur étant adapté pour coopérer par butée avec le deuxième tronçon pour limiter les débattements de la deuxième armature sensiblement perpendiculairement audit deuxième tronçon.

Le document DE-A-23 53619 décrit un exemple d'une suspente selon le préambule des revendications 1 et 12, qui présente notamment l'inconvénient que les débattements relatifs entre les première et deuxième armatures ne sont limités que par la résistance du corps en élastomère dans la direction du deuxième tronçon de la deuxième armature, de sorte que le corps en élastomère risque d'être soumis à des contraintes de traction excessives, conduisant à un vieillissement accéléré, voire à la rupture dudit corps en élastomère.

La présente invention a notamment pour but de pallier cet inconvénient.

Ce but est atteint, selon l'invention, grâce à une suspente tel que définie dans la revendication 1.

A cet effet, selon l'invention, une suspente d'échappement du genre en question est caractérisée en ce que la deuxième armature comporte en outre un troisième tronçon qui s'étend sensiblement parallèlement à l'organe limiteur,
et en ce que lesdits premier et troisième tronçons sont disposés pour pouvoir buter contre ledit organe limiteur en limitant les débattements relatifs des première et deuxième armatures sensiblement parallèlement audit deuxième tronçon.

Grâce à ces dispositions, on limite les débattements relatifs entre les première et deuxième armatures dans toutes les directions, en évitant ainsi de soumettre le corps en élastomère à des contraintes de traction excessives, ce qui améliore la résistance et la durée de vie de la suspente. De plus, ces dispositions permettent également de garantir que le corps en élastomère ne se désolidarise pas de la deuxième armature.

Dans des modes de réalisation préférés de l'invention, on peut éventuellement avoir recours en outre à l'une et/ou à l'autre des dispositions suivantes :
- l'organe limiteur est rigide et forme un bord intérieur sur lequel est fixé le corps en élastomère, ledit bord intérieur délimitant au moins partiellement l'ouverture formée par l'organe limiteur ;
- la première armature est constituée par une plaque de tôle découpée et pliée, l'organe limiteur faisant partie intégrante de la première armature ;
- ledit bord intérieur de l'organe limiteur est constitué par un bord de tôle roulé vers l'extérieur qui forme une surface intérieure convexe orientée vers l'ouverture de l'organe limiteur ;
- la deuxième armature est constituée par une unique pièce coudée, le troisième tronçon prolongeant le deuxième tronçon qui lui-même prolonge le premier tronçon ;
- la deuxième armature est constituée par un fil métallique coudé ;
- la deuxième armature est constituée par une tôle pliée ;
- le corps en élastomère est surmoulé sur l'organe limiteur ;
- le corps en élastomère est surmoulé sur la deuxième armature ;
- l'organe limiteur est rigide et le corps en élastomère est fixé sur ledit organe limiteur en formant des butées qui sont adaptées pour coopérer avec les premier et troisième tronçons de la deuxième armature pour limiter les débattements relatifs entre les première et deuxième armatures sensiblement parallèlement au deuxième tronçon de ladite deuxième armature ;
- le troisième tronçon de la deuxième armature est adapté pour buter contre la première armature dans une direction non parallèle au deuxième tronçon de ladite deuxième armature.

Par ailleurs, l'invention a également pour objet un véhicule automobile comportant des premier et deuxième éléments de véhicule choisis parmi la caisse du véhicule et une tubulure d'échappement du véhicule et reliés l'un à l'autre par une suspente telle que définie ci-dessus, la première armature étant fixée au premier élément de véhicule et la deuxième armature étant fixée au deuxième élément de véhicule.

Avantageusement, le premier élément de véhicule est constitué par la caisse du véhicule, le deuxième élément de véhicule est constitué par la tubulure d'échappement, la première armature est constituée par une unique pièce de tôle pliée et découpée qui comporte au moins une platine de fixation fixée sous la caisse du véhicule, l'organe limiteur étant formé d'une seule pièce avec la première armature et s'étendant vers le bas à partir de ladite platine de fixation.

D'autres caractéristiques et avantages de l'invention apparaîtront au cours de la description suivante de deux de ses deux formes de réalisation, données à titre d'exemples non limitatifs, en regard des dessins joints.

Sur les dessins :
- la figure 1 est une vue de côté d'une suspente de tubulure d'échappement selon une première forme de réalisation de l'invention, montée sur un véhicule,
- la figure 2 est une vue en perspective de la suspente de la figure 1,
- la figure 3 est une vue de face de la suspente de la figure 1, avant montage dans le véhicule,
- les figures 4 et 5 sont des vues en coupe, respectivement selon les lignes IV-IV de la figure 3 et V-V de la figure 4 ;
- et les figures 6 et 7 sont des vues similaires aux figures 3 et 4, dans une deuxième forme de réalisation de l'invention.

Sur les différentes figures, les mêmes références désignent des éléments identiques ou similaires.

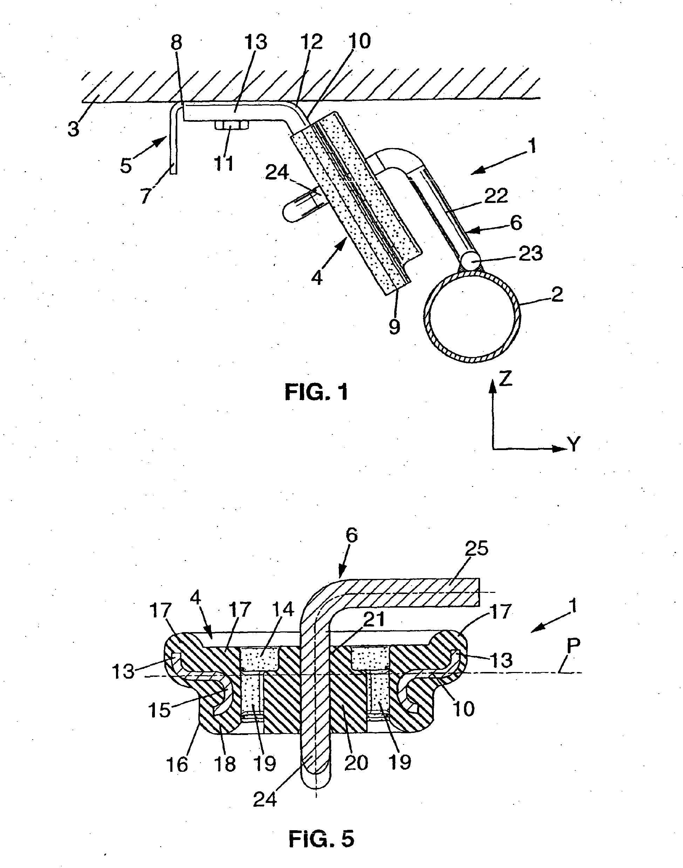

La figure 1 représente une suspente élastique 1 qui relie une tubulure d'échappement 2 de véhicule automobile à la caisse 3 de ce véhicule. La tubulure d'échappement 2 peut être constituée par toute partie de la ligne d'échappement du véhicule, y compris le silencieux d'échappement.

La suspente 1 comporte un corps en élastomère 4 qui est fixé d'une part, à une première armature rigide 5 solidarisée à la caisse 3 du véhicule et d'autre part, à une deuxième armature rigide 6 solidarisée à la tubulure d'échappement 2.

On notera que, le cas échéant, la première armature 5 pourrait être fixée à la tubulure d'échappement 2 et la deuxième armature 6 à la caisse 3 du véhicule.

Avantageusement, comme on peut le voir sur les figures 1, 2 et 4, la première armature 5 se présente sous la forme d'une plaque de tôle métallique découpée et pliée obtenue notamment par emboutissage, qui s'étend selon un premier axe horizontal Y entre :
- d'une part, une première extrémité 7 (formée ici par un bord replié vers le bas) qui appartient à une platine de fixation 8 horizontale,
- et d'autre part, une deuxième extrémité 9 qui appartient à un organe limiteur annulaire 10 s'étendant vers le bas.

La platine de fixation 8 est fixée en appui sous la caisse 3 du véhicule par une ou plusieurs vis 11 ou par d'autres moyens de fixation connus, tandis que l'organe limiteur 10, qui est formé d'une seule pièce avec la platine de fixation 8, prolonge ladite platine de fixation par l'intermédiaire d'une portion coudée 12 de la première armature, dans la direction de l'axe Y.

L'organe limiteur 10 s'étend vers le bas sans contact avec la caisse 3 du véhicule, soit parallèlement à l'axe vertical Z, soit en biais en formant un angle obtus avec la platine de fixation 8 comme dans l'exemple représenté sur les dessins.

Avantageusement, la première armature 5 comporte deux bords longitudinaux 13 rabattus vers le bas, qui s'étendent par exemple dans deux plans verticaux parallèles, perpendiculairement à la platine de fixation 8 et au plan moyen P de l'organe limiteur 10. Les bords rabattus 13 s'étendent au niveau de la potion coudée 12 et au moins partiellement le long de la platine de fixation 8 et de l'organe limiteur 10. De préférence, les bords rabattus 13 s'étendent continûment sur sensiblement toute la longueur de la platine de fixation 8 et de l'organe limiteur 10 dans la direction de l'axe Y.

Ces deux bords rabattus 13 forment ainsi des nervurés de raidissement qui permettent d'obtenir une résistance importante de la première armature. La platine de fixation 8 permet quant à elle une fixation particulièrement solide de ladite première armature à la caisse 3 du véhicule (ou le cas échéant à la tubulure 2, auquel cas la fixation de la platine 8 sur ladite tubulure peut être réalisée par exemple au moyen d'un collier de serrage ou autre).

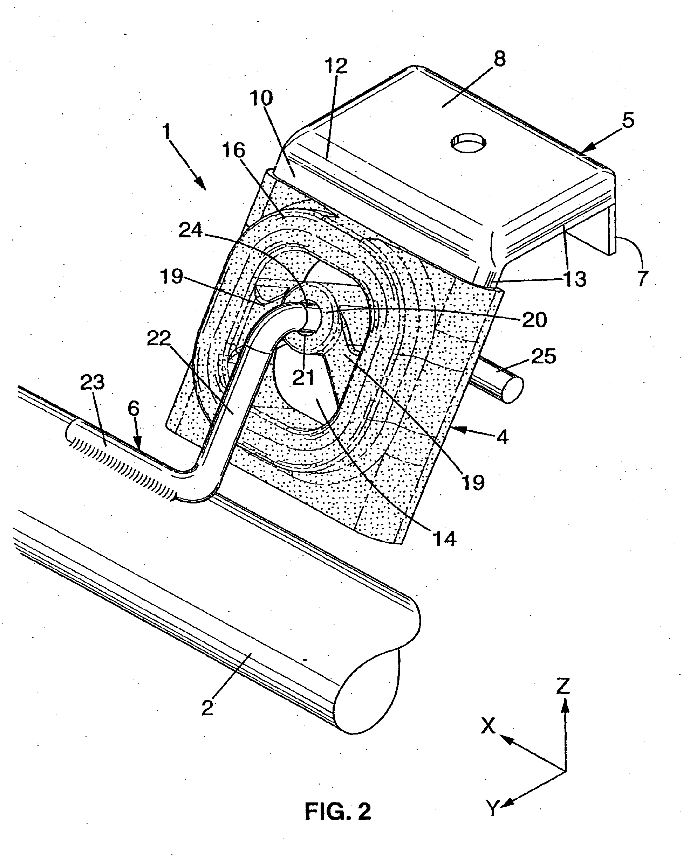

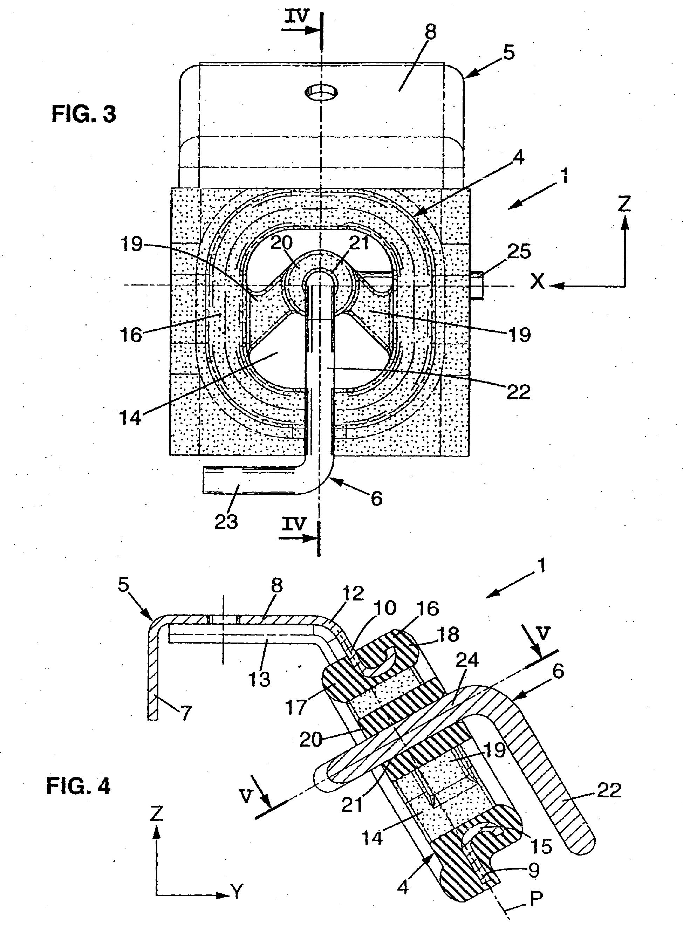

Comme on peut le voir sur les figures 2 et 3, l'organe limiteur 10 de la première armature est découpé de façon à former une ouverture centrale 14.

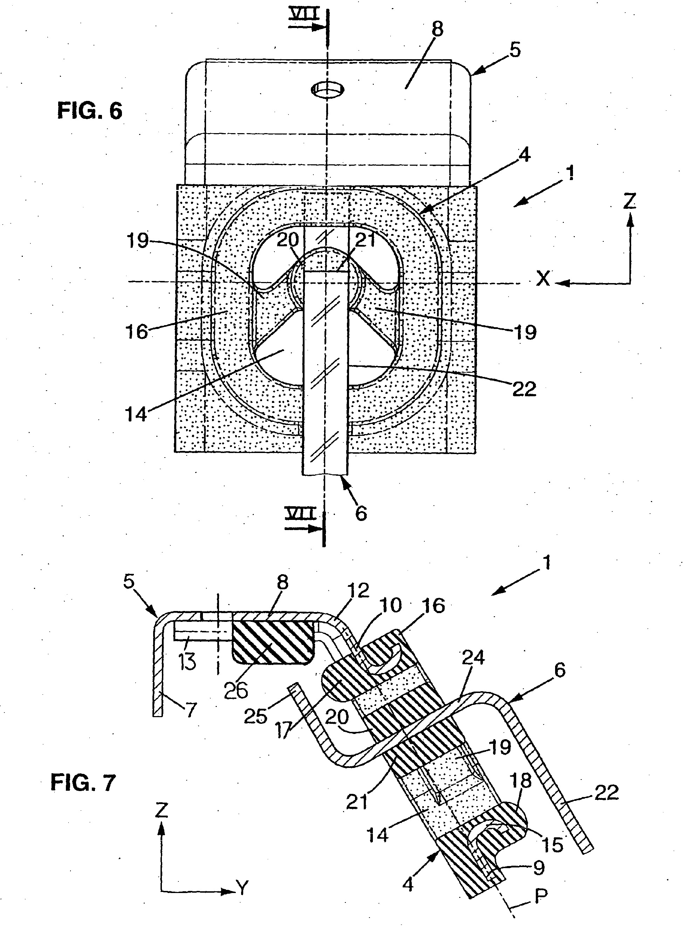

Comme on peut le voir sur les figures 4 et 5, cet organe limiteur 10 forme un bord annulaire intérieur 15 qui délimite entièrement l'ouverture 14 dans le plan moyen P dudit organe limiteur. De préférence, ce bord annulaire est roulé vers l'extérieur, de façon à présenter une face convexe vers l'intérieur de l'ouverture 14. Le bord 15 s'étend de préférence à l'opposé des bords rabattus 13 par rapport au plan moyen P de l'organe limiteur 10.

Par ailleurs, le corps en élastomère 4 est fixé sur l'organe limiteur 10 en recouvrant au moins ledit bord annulaire 15.

Avantageusement, dans l'exemple représenté, le corps en élastomère 4 est surmoulé sur l'organe limiteur 10, mais ledit corps en élastomère pourrait le cas échéant être fixé audit organe limiteur 10 par simple insertion de l'organe limiteur dans le corps en élastomère.

Comme représenté sur les figures 4 et 5, le corps en élastomère 4 comporte une partie périphérique 16 qui recouvre de préférence en totalité le bord roulé 15 et les bords rabattus 13, en formant ainsi deux bourrelets d'élastomère 17, 18 qui constituent des butées élastiques de part et d'autre du plan moyen P de l'organe limiteur 10. Ces bourrelets 17, 18 sont annulaires dans l'exemple représenté, mais pourraient le cas échéant ne pas être formés tout autour de l'ouverture 14.

Comme représenté sur les figures 2 et 3, la partie annulaire 16 du corps en élastomère est formée d'une seule pièce avec deux bras élastiques 19 qui s'étendent l'un vers l'autre et vers le haut dans l'ouverture 14 de la plaque de support, en formant un V inversé.

Ces deux bras élastiques 19 se rejoignent au niveau d'un sommet 20 traversé par un logement 21 cylindrique qui s'étend selon un axe central perpendiculaire au plan moyen P de la plaque de support (voir les figures 4 et 5).

Ce logement reçoit la deuxième armature 6, qui, dans l'exemple représenté, se présente sous la forme d'un fil métallique rigide coudé, à section circulaire, carrée ou autre. On notera que la deuxième armature 6 pourrait être constituée par toute autre pièce rigide coudée, par exemple une pièce de tôle pliée, une pièce moulée en alliage léger, un assemblage de pièces rigides, ou autre.

Comme représenté notamment sur la figure 2, la deuxième armature 6 comporte un premier tronçon 22 qui s'étend au moins verticalement vers le bas jusqu'à un organe de fixation 23 solidarisé à la tubulure d'échappement 2 (le cas échéant, le tronçon 22 pourrait s'étendre vers le haut jusqu'à la caisse du véhicule, si la platine 8 était fixée à la tubulure d'échappement 2).

L'organe de fixation 23 est constitué, dans l'exemple représenté ici, par une extrémité coudée du tronçon 22, qui s'étend selon un deuxième axe horizontal X perpendiculaire au premier axe Y et qui est soudée ou fixée autrement à la tubulure 2.

De préférence, le premier tronçon 22 de la deuxième armature 6 s'étend sensiblement parallèlement au plan moyen P de l'organe limiteur 10.

Ce premier tronçon 22 est prolongé, sensiblement perpendiculairement au plan moyen P, par un deuxième tronçon 24 qui est engagé dans le logement 21 du corps en élastomère, par exemple par emboîtement. En variante, le corps en élastomère pourrait également être surmoulé sur ledit deuxième tronçon 24.

Ce deuxième tronçon 24 est lui-même prolongé, de préférence sensiblement perpendiculairement au plan moyen P de l'organe limiteur 10, par un troisième tronçon 25 qui dans l'exemple représenté s'étend sensiblement parallèlement à l'axe X. Comme on peut le voir sur les figures 4 et 5, les premier et troisième tronçons 22, 25 sont disposés de façon à pouvoir buter respectivement contre les bourrelets 18, 17 du corps en élastomère, et ils sont disposés suffisamment près de ces bourrelets 18, 17 pour limiter les débattements relatifs des première et deuxième armatures 5, 6 à une valeur suffisamment faible sensiblement parallèlement au deuxième tronçon 24 de la deuxième armature.

En particulier, le débattement relatif des première et deuxième armatures est suffisamment limité dans la direction Y pour ne pas entraîner de trop fortes déformations des bras élastiques 19 du corps en élastomère, en limitant ainsi les contraintes de traction qui risquent d'être subies par ces bras 19.

La deuxième forme de réalisation de l'invention, représentée sur les figures 6 et 7, est similaire à la première forme de réalisation décrite précédemment, et ne sera donc pas décrite en détail ci-après.

Cette deuxième forme de réalisation de l'invention se distingue uniquement de la première forme de réalisation par les points suivants :
- la deuxième armature 6 est constituée par une tôle pliée dont le premier tronçon 22 peut être fixé directement ou non à la tubulure d'échappement du véhicule, et dont le troisième tronçon 25 s'étend avantageusement dans l'alignement vertical des premier et deuxième tronçons 22, 24,
- le troisième tronçon 25, qui s'étend vers la platine 8 à partir du deuxième tronçon 24, peut avantageusement être adapté pour buter sous ladite platine de fixation 8 en limitant les débattements de la deuxième armature 6 dans la direction verticale Z (à cet effet, l'extrémité libre du troisième tronçon 25 de la deuxième armature peut éventuellement être pourvue d'une butée en élastomère, et/ou ladite extrémité libre peut venir en contact avec une butée en élastomère 26 qui est adhérisée sous ladite platine 8),
- et les bourrelets 18, 17 ne sont pas annulaires, mais formés uniquement en regard respectivement des premier et troisième tronçons 22, 25 de la deuxième armature.

On notera par ailleurs que l'organe limiteur 10 pourrait également être une pièce rapportée sur la première armature 5, ou encore être constitué par un anneau limiteur souple et inextensible qui serait solidaire de la première armature 5, auquel cas le corps en élastomère (4) serait porté par une partie rigide de l'armature 5.

## Revendications

1. Suspente pour tubulure d'échappement de véhicule automobile, destinée à relier entre eux des premier et deuxième éléments de véhicule choisis parmi la caisse (3) du véhicule et une tubulure d'échappement (2) du véhicule, ladite suspente comportant au moins :
- un corps en élastomère (4),
- une première armature rigide (5) destinée à être fixée au premier élément de véhicule (3), cette première armature étant solidaire d'un organe limiteur (10) qui forme une ouverture (14) et ladite première armature étant reliée au corps en élastomère (4),
- et une deuxième armature rigide (6) qui est destinée à être fixée au deuxième élément de véhicule (2), cette deuxième armature comportant au moins d'une part, un premier tronçon (22) qui s'étend longitudinalement sensiblement parallèlement à l'organe limiteur, et d'autre part, un deuxième tronçon (24) qui pénètre dans l'ouverture (14) de l'organe limiteur, ledit deuxième tronçon traversant le corps en élastomère (4) de façon que ledit corps en élastomère relie ledit deuxième tronçon à la première armature, ledit organe limiteur (10) étant adapté pour coopérer par butée avec le deuxième tronçon (24) pour limiter les débattements de la deuxième armature (6) sensiblement perpendiculairement audit deuxième tronçon,
**caractérisée en ce que** la deuxième armature (6) comporte en outre un troisième tronçon (25) qui s'étend sensiblement parallèlement à l'organe limiteur,
**et en ce que** lesdits premier et troisième tronçons (22, 25) sont disposés pour pouvoir buter contre ledit organe limiteur (10) en limitant les débattements relatifs des première et deuxième armatures (5, 6) sensiblement parallèlement audit deuxième tronçon.

2. Suspente selon la revendication 1, dans laquelle l'organe limiteur (10) est rigide et forme un bord intérieur (15) sur lequel est fixé le corps en élastomère (4), ledit bord intérieur délimitant au moins partiellement l'ouverture (14) formée par l'organe limiteur.

3. Suspente selon la revendication 2, dans laquelle la première armature (5) est constituée par une plaque de tôle découpée et pliée, l'organe limiteur (10) faisant partie intégrante de la première armature (5).

4. Suspente selon la revendication 3, dans laquelle ledit bord intérieur (15) de l'organe limiteur est constitué par un bord de tôle roulé vers l'extérieur qui forme une surface intérieure convexe orientée vers l'ouverture (14) de l'organe limiteur (10).

5. Suspente selon l'une quelconque des revendications précédentes, dans laquelle la deuxième armature (6) est constituée par une unique pièce coudée, le troisième tronçon (25) prolongeant le deuxième tronçon (24) qui lui-même prolonge le premier tronçon (22).

6. Suspente selon la revendication 5, dans laquelle la deuxième armature (6) est constituée par un fil métallique coudé.

7. Suspente selon la revendication 5, dans laquelle la deuxième armature (6) est constituée par une tôle pliée.

8. Suspente selon l'une quelconque des revendications précédentes, dans laquelle le corps en élastomère (4) est surmoulé sur l'organe limiteur (10).

9. Suspente selon l'une quelconque des revendications précédentes, dans laquelle le corps en élastomère (4) est surmoulé sur la deuxième armature (6).

10. Suspente selon l'une quelconque des revendications précédentes, dans laquelle l'organe limiteur (10) est rigide et le corps en élastomère (4) est fixé sur ledit organe limiteur en formant des butées (17, 18) qui sont adaptées pour coopérer avec les premier et troisième tronçons (22, 25) de la deuxième armature pour limiter les débattements relatifs entre les première et deuxième armatures (5, 6) sensiblement parallèlement au deuxième tronçon (24) de ladite deuxième armature.

11. Suspente selon l'une quelconque des revendications précédentes, dans laquelle le troisième tronçon (25) de la deuxième armature est adapté pour buter contre la première armature (5) dans une direction non parallèle au deuxième tronçon (24) de ladite deuxième armature.

12. Véhicule automobile comportant des premier et deuxième éléments de véhicule (3, 2) choisis parmi la caisse du véhicule et une tubulure d'échappement du véhicule, **caractérisé en ce que** ledits éléments de véhicule sont reliés l'un à l'autre par une suspente (1) selon l'une quelconque des revendications précédentes, la première armature (5) étant fixée au premier élément de véhicule (3) et la deuxième armature (6) étant fixée au deuxième élément de véhicule (2).

13. Véhicule selon la revendication 12, dans lequel le premier élément de véhicule est constitué par la caisse (3) du véhicule, le deuxième élément de véhicule est constitué par la tubulure d'échappement (2), la première armature (5) est constituée par une unique pièce de tôle pliée et découpée qui comporte au moins une platine de fixation (8) fixée sous la caisse (3) du véhicule, l'organe limiteur (10) étant formé d'une seule pièce avec la première armature et s'étendant vers le bas à partir de ladite platine de fixation.

## Claims

1. Exhaust pipe suspension hanger for a motor vehicle, intended to interconnect first and second vehicle elements chosen from the body (3) of the vehicle and an exhaust pipe (2) of the vehicle, the said suspension hanger comprising at least:
- an elastomer body (4),
- a first rigid fitting (5) intended to be fastened to the first vehicle element (3), this first fitting being integral with a limiting device (7) which forms an opening (14) and the said first fitting being connected to the elastomer body (4),
- and a second rigid fitting (6) which is intended to be fastened to the second vehicle element (2), this second fitting comprising at least, on the one hand, a first section (22) which extends longitudinally substantially parallel to the limiting device, and, on the other hand, a second section (24) which enters the opening (14) of the limiting device, the said second section passing through the elastomer body (4) such that the said elastomer body connects the said section to the first fitting, the third limiting device (10) being adapted to cooperate with the second section (24) by abutment so as to limit the deflections of the second fitting (6) substantially perpendicularly to the said second section,
**characterized in that** the second fitting (6) additionally comprises a third section (25) which extends substantially parallel to the limiting device, and **in that** the said first and third sections (22, 25) are arranged so that they can butt against the said limiting device (10) and thereby limit the relative deflections of the first and second fittings (5, 6) substantially parallel to the said second section.

2. Suspension hanger according to Claim 1, in which the limiting device (10) is rigid and forms an inner edge (15) to which the elastomer body (4) is fastened, the said inner edge at least partially delimiting the opening (14) formed by the limiting device.

3. Suspension hanger according to Claim 2, in which the first fitting (5) consists of a sheet-metal plate which has been cut and folded, the limiting device (10) forming an integral part of the first fitting (5).

4. Suspension hanger according to Claim 3, in which the said inner edge (15) of the limiting device consists of an outwardly rolled sheet-metal edge which forms a convex inner surface oriented towards the opening (14) of the limiting device (10).

5. Suspension hanger according to any one of the preceding claims, in which the second fitting (6) consists of a single bent piece, the third section (25) extending the second section (24) which itself extends the first section (22).

6. Suspension hanger according to Claim 5, in which the second fitting (6) consists of a bent metal wire.

7. Suspension hanger according to Claim 5, in which the second fitting (6) consists of a folded metal sheet.

8. Suspension hanger according to any one of the preceding claims, in which the elastomer body (4) is overmoulded onto the limiting device (10).

9. Suspension hanger according to any one of the preceding claims, in which the elastomer body (4) is overmoulded onto the second fitting (6).

10. Suspension hanger according to any one of the preceding claims, in which the limiting device (10) is rigid, and the elastomer body (4) is fastened to the said limiting device to form abutments (17, 18) which are adapted to cooperate with the first and third sections (22, 25) of the second fitting so as to limit the relative deflections between the first and second fittings (5, 6) substantially parallel to the second section (24) of the said second fitting.

11. Suspension hanger according to any one of the preceding claims, in which the third section (25) of the second fitting is adapted to butt against the first fitting (5) in a direction which is not parallel to the second section (24) of the said second fitting.

12. Motor vehicle comprising first and second vehicle elements (3, 2) chosen from the body of the vehicle and an exhaust pipe of the vehicle, **characterized in that** the said vehicle elements are interconnected by a suspension hanger (1) according to any one of the preceding claims, the first fitting (5) being fastened to the first vehicle element (3) and the second fitting (6) being fastened to the second vehicle element (2).

13. Vehicle according to Claim 12, in which the first vehicle element consists of the body (3) of the vehicle, the second vehicle element consists of the exhaust pipe (2), the first fitting (5) consists of a single piece of folded and cut sheet metal which comprises at least one mounting plate (8) fastened below the body (3) of the vehicle, the limiting device (10) being formed in a single piece with the first fitting and extending downwards from the said mounting plate.

## Patentansprüche

1. Aufhängung für die Abgasanlage eines Kraftfahrzeugs, vorgesehen, um untereinander ein erstes und ein zweites Fahrzeugelement zu verbinden, die ausgewählt sind unter dem Wagenkasten (3) des Fahrzeugs und einer Abgasanlage (2) des Fahrzeugs, wobei die Aufhängung wenigstens umfasst:
- einen Elastomerkörper (4),
- ein erstes steifes Gestell (5), dass vorgesehen ist, um an dem ersten Fahrzeugelement (3) befestigt zu werden, wobei dieses erste Gestell fest mit einer Begrenzereinrichtung (10) verbunden ist, welche eine Öffnung (14) bildet, und das erste Gestell mit dem Elastomerkörper (4) verbunden ist,
- und ein zweites steifes Gestell (6), das vorgesehen ist, um an dem zweiten Fahrzeugelement (2) befestigt zu werden, wobei dieses zweite Gestell wenigstens einerseits einen ersten Abschnitt (22), der sich longitudinal im wesentlichen parallel zu der Begrenzereinrichtung erstreckt, und andererseits einen zweiten Abschnitt (24) umfasst, der in die Öffnung (14) der Begrenzereinrichtung eindringt, wobei der zweite Abschnitt den Elastomerkörper (4) so durchquert, dass der Elastomerkörper den zweiten Abschnitt mit dem ersten Gestell verbindet, wobei die Begrenzereinrichtung (10) eingerichtet ist, um durch Anschlag mit dem zweiten Abschnitt (24) zusammenzuwirken, um die Bewegungen des zweiten Gestells (6) im wesentlichen senkrecht zu dem zweiten Abschnitt zu begrenzen, **dadurch gekennzeichnet, dass** das zweite Gestell (6) ferner einen dritten Abschnitt (25) umfasst, der sich im wesentlichen parallel zu der Begrenzereinrichtung erstreckt, und dass der erste und der dritte Abschnitt (22, 25) angeordnet sind, um gegen die Begrenzereinrichtung (10) anschlagen und dabei die Relativbewegungen des ersten und des zweiten Gestells (5, 6) im wesentlichen parallel zu dem zweiten Abschnitt begrenzen zu können.

2. Aufhängung nach Anspruch 1, bei der die Begrenzereinrichtung (10) starr ist und einen inneren Rand (15) bildet, an welchem der Elastomerkörper (4) befestigt ist, wobei dieser innere Rand wenigstens teilweise die von der Begrenzereinrichtung gebildete Öffnung (14) begrenzt.

3. Aufhängung nach Anspruch 2, bei der das erste Gestell durch eine zugeschnittene und gebogene Blechplatte gebildet ist und die Begrenzereinrichtung (10) integrierender Bestandteil des ersten Gestells (5) ist.

4. Aufhängung nach Anspruch 3, bei der der innere Rand (15) der Begrenzereinrichtung durch einen nach außen gerollten Blechrand gebildet ist, der eine zu der Öffnung (14) der Begrenzereinrichtung (10) hingewandte konvexe Innenoberfläche bildet.

5. Aufhängung nach einem beliebigen der vorgehenden Ansprüche, bei der das zweite Gestell (6) durch ein einziges gekröpftes Teil gebildet ist, wobei der dritte Abschnitt (25) den zweiten Abschnitt (24) verlängert, der seinerseits den ersten Abschnitt (22) verlängert.

6. Aufhängung nach Anspruch 5, bei der das zweite Gestell (6) durch einen gekröpften Metalldraht gebildet ist.

7. Aufhängung nach Anspruch 5, bei der das zweite Gestell (6) durch ein gebogenes Blech gebildet ist.

8. Aufhängung nach einem beliebigen der vorhergehenden Ansprüche, bei welcher der Elastomerkörper (4) an das Begrenzerorgan (10) angeformt ist.

9. Aufhängung nach einem beliebigen der vorhergehenden Ansprüche, bei welcher der Elastomerkörper (4) an das zweite Gestell (6) angeformt ist.

10. Aufhängung nach einem beliebigen der vorhergehenden Ansprüche, bei welcher die Begrenzereinrichtung (10) steif ist und der Elastomerkörper (4) an der Begrenzereinrichtung befestigt ist und dabei Anschläge (17, 18) bildet, die eingerichtet sind, um mit dem ersten und dem dritten Abschnitt (22, 25) des zweiten Gestells zusammenzuwirken, um die Relativbewegungen zwischen dem ersten und dem zweiten Gestell (5, 6) im wesentlichen parallel zu dem zweiten Abschnitt (24) des zweiten Gestells zu begrenzen.

11. Aufhängung nach einem beliebigen der vorhergehenden Ansprüche, bei welcher der dritte Abschnitt (25) des zweiten Gestells eingerichtet ist, um in einer zu dem zweiten Abschnitt (24) des zweiten Gestells nicht parallelen Richtung gegen das erste Gestell (5) anzuschlagen.

12. Kraftfahrzeug mit ersten und zweiten Fahrzeugelementen (3, 2), ausgewählt unter dem Fahrzeugkasten und einer Abgasanlage des Fahrzeugs, **dadurch gekennzeichnet, dass** die Fahrzeugelemente untereinander durch eine Aufhängung (1) nach einem beliebigen der vorhergehenden Ansprüche verbunden sind, wobei das erste Gestell (5) am ersten Fahrzeugelement (3) und das zweite Gestell (6) am zweiten Fahrzeugelement (2) befestigt ist.

13. Fahrzeug nach Anspruch 12, bei welchem das erste Fahrzeugelement durch den Kasten (3) des Fahrzeugs gebildet ist, das zweite Fahrzeugelement durch die Abgasanlage (2) gebildet ist, das erste Gestell (5) durch ein einziges gebogenes und zugeschnittenes Stück Blech gebildet ist, das wenigstens eine unter dem Kasten (3) des Fahrzeugs befestigte Befestigungsplatte (8) umfasst, und die Begrenzereinrichtung (10) einteilig mit dem ersten Gestell ausgebildet ist und sich von der Befestigungsplatte aus nach unten erstreckt.
